# DEMANDE DE BREVET EUROPEEN

(11) **EP 1 419 697 A1**
(43) Date de publication de la demande: **19.05.2004**
(21) Numéro de dépôt: 03356174.7
(22) Date de dépôt: 12.11.2003
(51) Int. Cl.: A22C 21/00

(54) **Procede de bridage d'une volaille et la machine de mise en oeuvre du procede**

(30) Priorité: 15.11.2002 FR 0214479
(71) Demandeur: Emsens, Michel, 42490 Fraisses (FR)
(72) Inventeur: Emsens, Michel, 42490 Fraisses (FR)
(74) Mandataire: Thivillier, Patrick

(57) **Abrégé**

La machine comprend :
- un bâti support (1) équipé d'un convoyeur (2) recevant une pluralité de supports (4) ;
- des moyens (5) pour assurer le positionnement et le maintien de la volaille dans le support (4) au fur et à mesure de son déplacement linéaire ;
- un poste de bridage équipé de moyens (10) aptes à rapprocher simultanément les deux cuisses, de moyens (13) aptes à rabattre en arrière le haut desdites cuisses sur les filets et l'extrémité du pilon, en direction du croupion et d'au moins une pince (15) assujettie à de moyens (13) de commande pour être déplacée selon les trois axes, X, Y, Z;
- un poste d'évacuation de la volaille au fur et à mesure du déplacement du support (4) pour un cycle suivant ;
- un poste de transfert de la volaille ;
- un poste de mise en place d'un lien autour du support.

## Description

L'invention se rattache au secteur technique du bridage industriel des volailles, préalablement abattues et plumées, notamment celles du type poulets.

D'une manière connue, le bridage est réalisé au moyen d'un lien élastique sous forme d'une boucle, convenablement disposée aux niveaux dorsal et ventral de la volaille, afin de maintenir les membres plaqués contre le corps de ladite volaille. Généralement, pour une bonne tenue des membres contre le corps de volaille, le lien passe entre l'abdomen et l'intérieur des cuisses, et contourne le croupion en maintenant l'extrémité des pattes appliquées contre ce dernier. Le plus souvent, cette technique de bridage est effectuée d'une manière manuelle, ce qui est long et nécessite une main d'oeuvre importante.

On a proposé d'automatiser cette opération de bridage au moyen de machines spécifiques.
On peut citer par exemple l'enseignement du brevet FR 2.653.301 qui concerne un dispositif sous forme d'un ensemble support recevant la volaille et monté pivotant dans un équipage mobile apte à effectuer une révolution complète pour réaliser l'opération de bridage en combinaison avec des chemins de came provoquant le déplacement d'un système de pinces coopérant avec un lien élastique. Avec un tel dispositif, il y a autant de systèmes de pinces que d'équipages mobiles. Chaque système de pinces se déplace avec le support recevant la volaille. Il en résulte une certaine complexité et un encombrement important.

On peut citer également l'enseignement de la demande de brevet européen EP 0 413629 qui concerne un procédé et une installation pour la conformation des pattes et le bridage de volailles. Là encore, l'installation met en oeuvre des moyens compliqués nécessitant notamment une pince de maintien saisissant le corps de la volaille à sa partie dorsale et une pince de contention enserrant la volaille à l'extérieur des pattes pour maintenir les pattes en position repliée contre le corps tout en laissant dégagée la partie ventrale.

Une autre solution ressort de l'enseignement du brevet FR 2.724.294 dont le demandeur de la présente est également le titulaire. Cette demande de brevet concerne une machine pour le bridage de volailles au moyen d'une boucle, sous forme d'un lien souple élastique enserrant un support apte à retenir la volaille. Le support constitue un volume ouvert constituant une contreforme correspondant à un type déterminé de volaille. Le support est assujetti à des moyens prépositionnés au niveau du poste de bridage qui comprend deux ensembles équipés d'organes de préhension déplaçables par rapport au(x) support(s) qui demeure(nt) avec une position relative fixe par rapport auxdits ensembles pendant l'opération de bridage. Les organes de préhension peuvent intervenir successivement sur le lien pour assurer le bridage des membres de la volaille au niveau de sa partie dorsale et au niveau de sa partie ventrale.
Malgré les avantages importants que procure cette machine par rapport aux solutions antérieures, elle demeure, malgré tout, relativement complexe et ne permet pas des cadences de production élevées.

L'invention s'est fixée pour but de remédier à ces inconvénients, de manière simple, sûre, efficace et rationnelle.

Le problème que se propose de résoudre l'invention est de simplifier, d'une manière importante, les moyens de mise en oeuvre, de faciliter la mise en place des volailles en vue de les soumettre à l'opération de bridage et de diminuer le temps nécessaire au bridage, afin d'augmenter, d'une manière significative, les cadences de production, en ayant pour objectif de pouvoir assurer une opération de bridage en continu.

Pour résoudre un tel problème, il a été conçu et mis au point un procédé de bridage selon lequel :
- on positionne la volaille en appui dorsal dans un support pré-équipé d'un lien élastique sous forme d'une boucle ;
- on déplace le support avec la volaille en direction d'un poste de bridage selon lequel :
   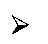 on rapproche simultanément les deux cuisses ;
   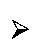 on rabat en arrière, le haut des cuisses sur les filets et l'extrémité du pilon en direction du croupion ;
   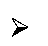 on saisit le lien qui pré-équipe le support, au moyen d'une pince ;
   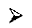 on agit sur la pince en rotation et en translation pour former sensiblement un huit pour enserrer l'extrémité des pattes avec le croupion ;
   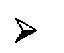 on pivote et on rabaisse la pince pour dégager le lien ;
- on déplace le support avec la volaille bridée en direction d'un poste d'évacuation et de transfert de la volaille ;
- on soumet le support vide à un poste apte à l'équiper d'un autre lien pour un cycle suivant.

Pour la mise en oeuvre du procédé, il a été conçu une machine qui comprend au moins un support pour le positionnement d'une volaille, de manière à ce que son croupion et ses pattes soient orientés vers le haut, et au moins un poste apte à assurer le bridage des membres de la volaille au niveau de sa partie dorsale et de sa partie ventrale au moyen d'un lien élastique enserrant ledit support.
Selon l'invention, cette machine présente :
- un bâti équipé d'un convoyeur recevant une pluralité de supports ;
- des moyens pour assurer le positionnement et le maintien de la volaille dans le support au fur et à mesure de son déplacement linéaire ;
- un poste de bridage équipé de moyens aptes à rapprocher simultanément les deux cuisses, de moyens aptes à rabattre en arrière le haut desdites cuisses sur les filets et l'extrémité du pilon, en direction du croupion et d'au moins une pince assujettie à des moyens de commande pour être déplacée selon les trois axes, X, Y, Z ;
- un poste d'évacuation de la volaille au fur et à mesure du déplacement du support pour un cycle suivant ;
- un poste de transfert de la volaille ;
- un poste de mise en place d'un lien autour du support.

Pour résoudre le problème posé d'assurer le positionnement de la volaille, le support présente une partie fixe faisant office de réceptacle et une partie mobile constituant une semelle d'appui équipée de moyens de prépositionnement réglables de la volaille et des moyens aptes à assurer la mise en place et le maintien de la volaille dans la partie faisant office de réceptacle, au fur et à mesure du déplacement linéaire dudit support.

Pour résoudre le problème posé d'assurer le chargement et le déchargement automatique de la volaille par rapport à son support, la partie mobile constituant la semelle d'appui, est articulée par rapport à la partie faisant office de réceptacle et est équipée des moyens de mise en place et de positionnement sous forme d'un bras équerré présentant, à chacune de ses extrémités, des organes de roulement aptes à coopérer avec une rampe profilée disposée le long du convoyeur, de manière à provoquer, d'une part, le rabattement progressif de la semelle en direction du réceptacle au fur et à mesure du déplacement linéaire du support jusqu'au poste de bridage et, d'autre part, au-delà dudit poste, son ouverture progressive pour l'évacuation de la volaille bridée.

Pour résoudre le problème posé de tenir compte des écarts dimensionnels des volailles, les moyens de prépositionnement réglables de la semelle sont constitués par des doigts en matière souple déformable et entre lesquels est positionné le corps de la volaille en appui au niveau du haut des cuisses.

Pour résoudre le problème posé de faciliter la mise en place du lien en relation avec les pattes et le croupion, la partie fixe faisant office de réceptacle, présente un bec d'appui profilé apte à coopérer avec le bréchet de la volaille, sensiblement entre les deux cuisses, en alignement avec le croupion pour emprisonner ledit bréchet.

Pour résoudre le problème posé d'approcher les cuisses contre le corps de la volaille, les moyens sont constitués par deux plaques latérales et parallèles assujetties à des organes de commande pour être rapprochées et écartées l'une de l'autre, lesdites plaques étant disposées parallèlement aux bords longitudinaux du convoyeur.

Pour résoudre le problème posé de rabattre en arrière les cuisses, les moyens sont constitués par des doigts engagés dans des fentes rectilignes formées dans l'épaisseur des plaques d'appui, lesdits doigts étant assujettis à des moyen de commande pour être déplacés en translation dans les deux sens, d'une manière séparée, ou en synchronisme.

Pour résoudre le problème posé d'assurer la préhension automatique du lien en vue de sa mise en place au niveau de la partie déterminée de la volaille, la pince est composée de deux bras assujettis à un système de biellettes déformables pour être à volonté écartés ou rapprochés, l'extrémité libre desdits bras présentant des moyens de crochetage aptes à coopérer avec une partie du lien souple.

Pour résoudre le problème posé de former, avec le lien, sensiblement un huit pour enserrer l'extrémité des pattes avec le croupion, les moyens de déplacement de la pince sont constitués par des organes de commande, du type vérin, aptes à assurer le cycle de fonctionnement suivant :
- descente de la pince, d'un côté du support, pour accrocher le lien ;
- déplacement en translation de la pince pour étirer le lien à l'extérieur du support ;
- pivotement à 90° de la pince pour croiser les brins du lien ;
- écartement des bras de la pince ;
- déplacement en translation, en sens inverse, de la pince pour ramener le lien croisé au-dessus de la volaille ;
- resserrement et descente de la pince, de l'autre côté du support, pour enserrer les pattes et le croupion, et dégager le lien.

Selon une autre caractéristique, le poste d'évacuation de la volaille au fur et à mesure du déplacement du support, est constitué par une rampe coopérant avec les organes de roulement du bras équerré que présente la semelle rabattable du support, de manière à permettre l'ouverture de ladite semelle en vue de libérer la volaille pour qu'elle tombe par gravité sur le poste de transfert, constitué par un tapis roulant incliné.

Pour résoudre le problème posé d'équiper préalablement le support du lien souple, avant positionnement de la volaille, le poste de mise en place du lien est situé sous le convoyeur et comprend des moyens de stockage de plusieurs liens et des moyens aptes à saisir et à positionner un lien autour de la section externe de la partie fixe du support faisant office de réceptacle.

Dans une forme de réalisation avantageuse, le convoyeur est constitué par une pluralité de plaques articulées entre elles, de manière à constituer une chaîne sans fin, en combinaison avec des rouleaux d'entraînement, lesdites plaques présentant des agencements pour la fixation des supports.

L'invention est exposée ci-après plus en détail à l'aide des figures des dessins annexés dans lesquels :

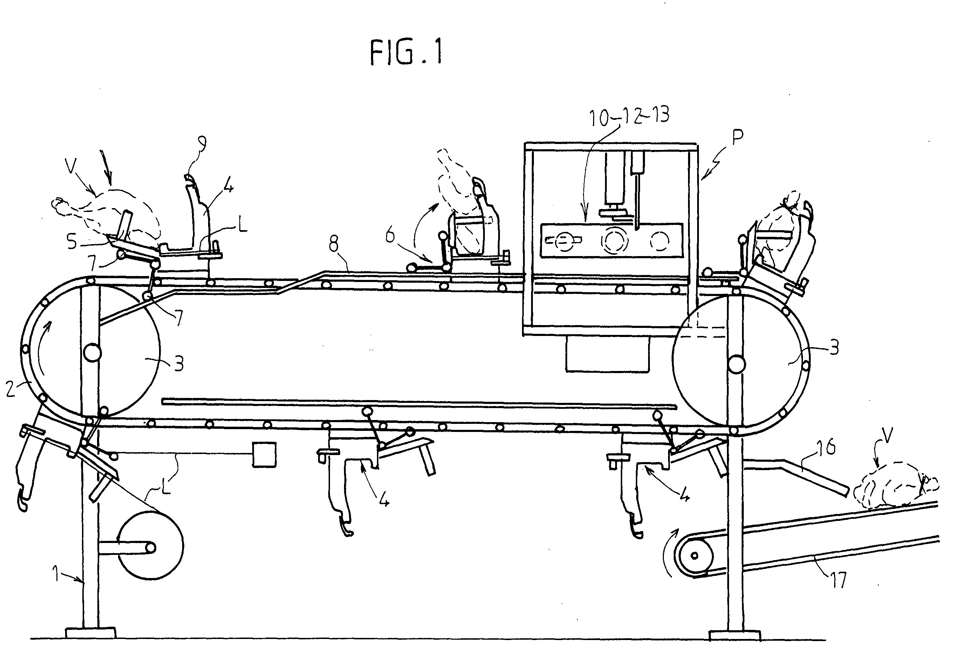

- la figure 1 est une vue, à caractère schématique, d'un exemple de réalisation de la machine de bridage selon l'invention ;
- les figures 2 à 21 sont des vues en perspective, à caractère schématique, montrant les principales phases de fonctionnement du procédé de bridage selon l'invention.

La machine comprend un bâti (1) équipé d'un convoyeur constitué d'une pluralité de plaques articulées entre elles (2) de manière à constituer une chaîne sans fin, en combinaison avec des rouleaux d'entraînement (3). L'entraînement en rotation des rouleaux (3) et le déplacement linéaire de la chaîne sans fin résultant de l'accouplement articulé des plaques (2), s'effectuent pas tout moyen approprié. Les plaques (2) présentent des agencements pour la fixation d'un support (4). La chaîne sans fin (2) est donc équipée d'une pluralité de supports (4) convenablement espacés en fonction du temps du cycle de bridage, comme il sera indiqué dans la suite de la description.

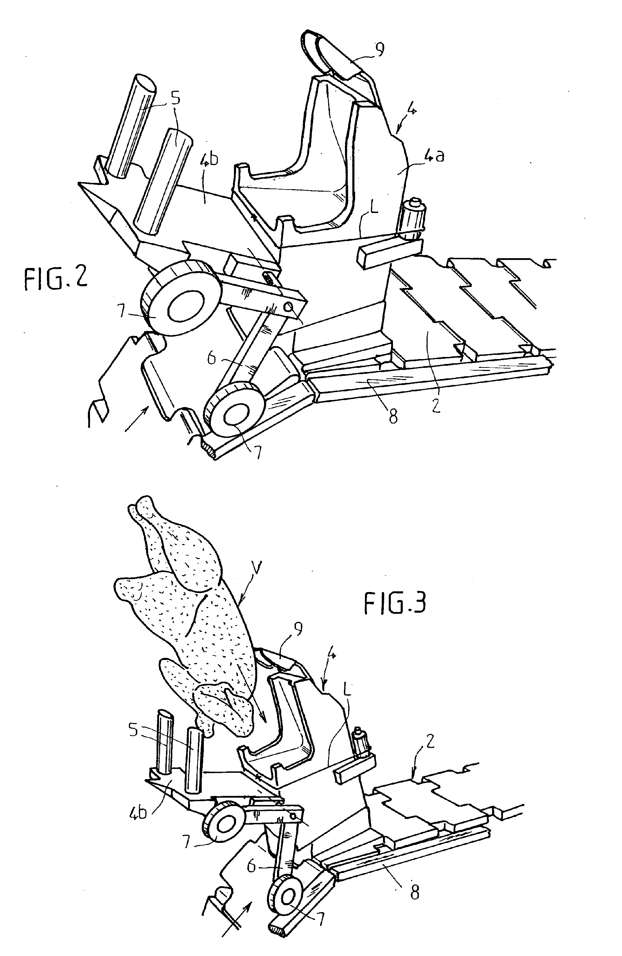

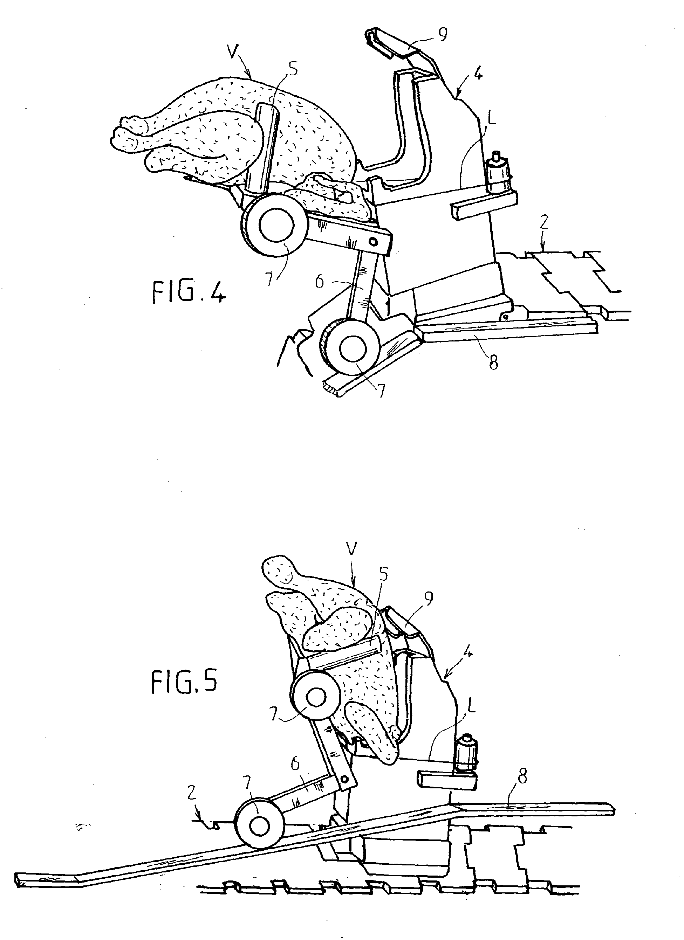

Chaque support (4) présente une partie fixe (4a) faisant office de réceptacle pour le positionnement d'une volaille (V), de manière à ce que son croupion et ses pattes soient orientés vers le haut. Dans ce but, l'une des faces transversales du réceptacle (4a) est accouplée, d'une manière articulée, à une partie mobile (4b) constituant une semelle d'appui. Cette semelle d'appui (4b) est équipée de moyens de positionnement (5) réglables, sous forme, par exemple, de doigts en matière souple déformable. Le corps de la volaille est disposé entre les doigts (5), en appui au niveau du haut des cuisses (figures 3 et 4). La mise en place de la volaille (V), au niveau de la semelle (4b), dans les conditions indiquées précédemment, s'effectue manuellement ou d'une manière automatique.

La semelle d'appui (4b) est équipée de moyens pour assurer la mise en place et le maintien de la volaille dans la partie réceptacle (4a), au fur et à mesure du déplacement linéaire du support (4), sous l'effet de l'entraînement de la bande sans fin (2). Dans ce but, la semelle d'appui (4b) est rendue solidaire, d'un côté au moins, d'un bras équerré (6) présentant, à chacune de ses extrémités, des organes de roulement (7) aptes à coopérer avec une rampe profilée (8).
Cette rampe (8), sous forme par exemple d'un fer plat, composée de différents segments d'inclinaisons variables, est disposée le long du convoyeur (2) et parallèlement à ce dernier. Il en résulte, au fur et à mesure du déplacement linéaire du support, le rabattement progressif de la semelle (4b) en direction du réceptacle (4a) (figures 3, 4 et 5). Dans cette position, la volaille est parfaitement maintenue et positionnée à l'intérieur du réceptacle (4a), la semelle (4b) assurant un verrouillage.

Comme il sera indiqué dans la suite de la description, cette position de verrouillage est assurée jusqu'à un poste de bridage (P), tandis qu'au-delà du poste de bridage, le bras équerré (6) permet l'ouverture progressive de la semelle d'appui (4b) en combinaison avec une autre rampe.

Comme le montre notamment la figure 2, la partie faisant office de réceptacle (4a) présente un bec d'appui profilé (9) apte à coopérer avec le bréchet de la volaille, sensiblement entre les deux cuisses et en alignement avec le croupion. Le profilage du bec (9) est déterminé pour faire glisser le lien entre le filet et l'intérieur du haut des cuisses et pour permettre audit lien de passer sur le bréchet.

L'ensemble du support (4), tel que défini, est dirigé linéairement, en combinaison avec le convoyeur (2), au niveau du poste de bridage (P) que présente le bâti de la machine. Ce poste de bridage est équipé de moyens aptes à rapprocher simultanément les deux cuisses, de moyens aptes à rabattre en arrière le haut desdites cuisses sur les filets et l'extrémité du pilon, en direction du croupion, et d'au moins une pince assujettie à des moyens de commande, pour être déplacée selon les trois axes X, Y, Z.

On observe qu'avant positionnement du support (4), au niveau du poste de bridage, ce dernier est équipé d'un lien souple (L) qui enserre la section du réceptacle (4a).

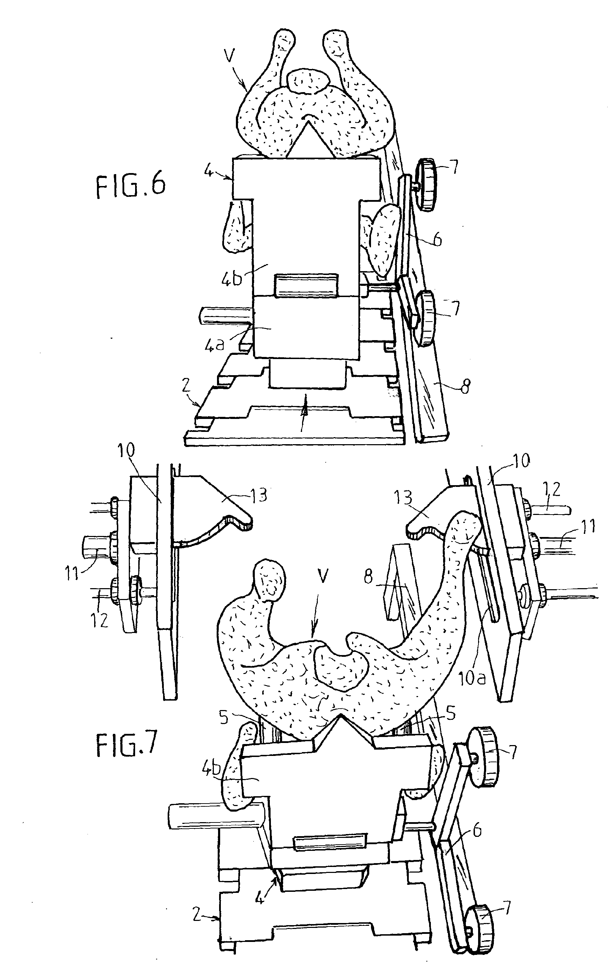

Comme le montrent notamment les figures 6 à 13, les moyens aptes à rapprocher simultanément les deux cuisses, sont constitués par deux plaques latérales (10). Les deux plaques latérales (10) sont parallèles entre elles et aux bords longitudinaux du convoyeur (2). Chacune des plaques est assujettie à des organes de commande du type vérins (11), pour être rapprochées et écartées l'une de l'autre, en combinaison avec des tiges de guidage (12).

Les moyens aptes à rabattre en arrière les cuisses, sont constitués par des doigts (13) engagés dans des fentes rectilignes (10a) formées dans l'épaisseur des plaques d'appui (10). Chacun des doigts (13) est assujetti à des moyens de commande du type vérins (14) pour être déplacés en translation dans les deux sens, d'une manière séparée ou en synchronisme. On renvoie notamment aux figures 7, 8 et 9.

La pince en tant que telle est composée de deux bras (15) assujettis à un système de biellettes déformables (15a) pour être, à volonté, écartés ou rapprochés. L'extrémité libre des bras (15) présente des moyens de crochetage (15b) aptes à coopérer avec une partie du lien souple (L). L'ensemble de la pince (15 - 15a) est asservi à des moyens de commande et de programmation, pour être déplacé linéairement en translation horizontale et verticale, ainsi qu'en pivotement, comme il sera indiqué dans la suite de la description, au moment de l'analyse du fonctionnement de la machine. Ces différents mouvements de la pince permettent de conditionner le lien sensiblement en forme de huit, pour enserrer l'extrémité des pattes avec le croupion.

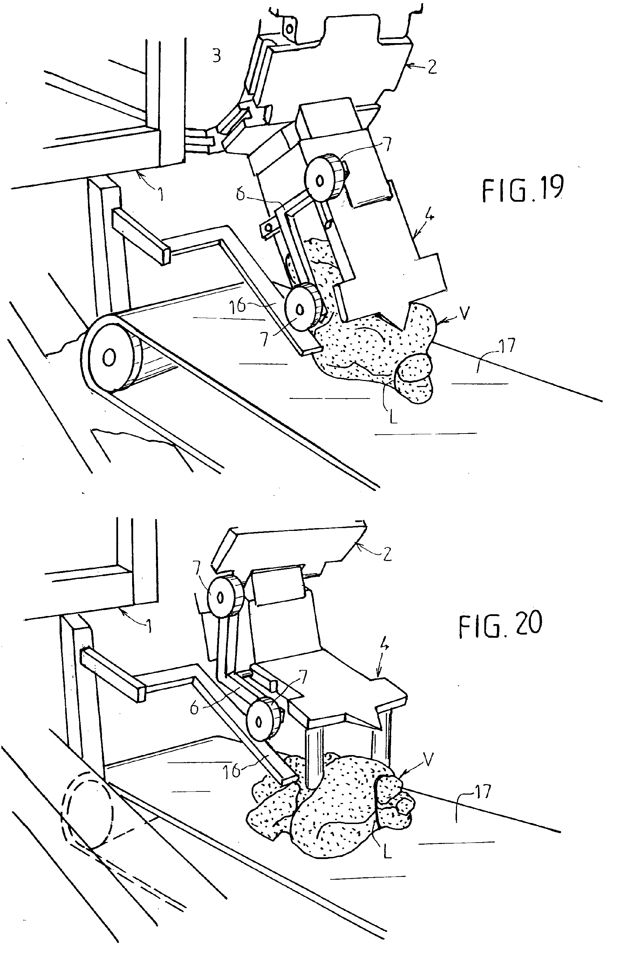

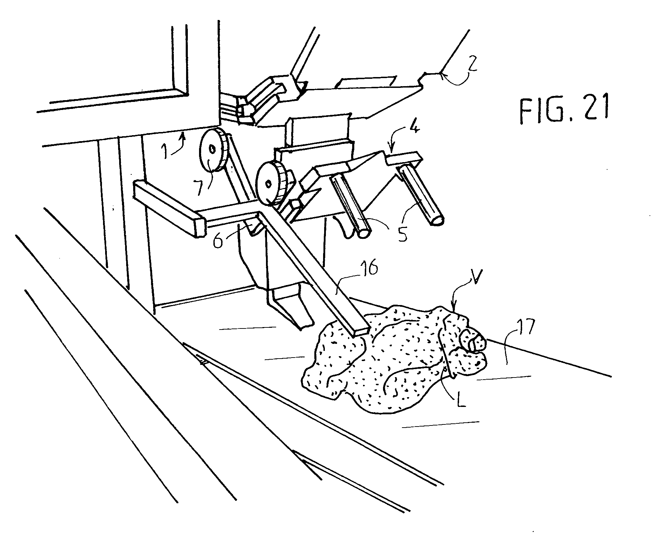

En aval du poste de bridage, la machine présente un poste d'évacuation de la volaille au fur et à mesure du déplacement du support (4) pour un cycle suivant. Ce poste d'évacuation est constitué par une rampe (16) coopérant avec les organes de roulement (7) du bras équerré (6). Comme le montrent les figures 19, 20 et 21 notamment, au fur et à mesure du déplacement du support (4) avec la volaille bridée, le bras équerré coopère avec la rampe (16) provoquant, d'une manière concomitante, l'ouverture progressive de la semelle (4b) en vue de libérer la volaille, afin que cette dernière tombe, par gravité, sur un tapis de transfert (17). Le tapis de transfert (17) est incliné et motorisé, pour assurer l'évacuation de la volaille bridée à un endroit quelconque, par exemple au niveau d'un poste d'emballage.

Après avoir été déchargé de la volaille bridée, le support (4) est positionné au niveau d'un poste situé sous le convoyeur (2) et apte à assurer la mise en place du lien (L). Ce poste comprend des moyens de stockage de plusieurs liens et des moyens aptes à saisir et à positionner un lien autour de la section externe de la partie réceptacle (4a) du support (4).

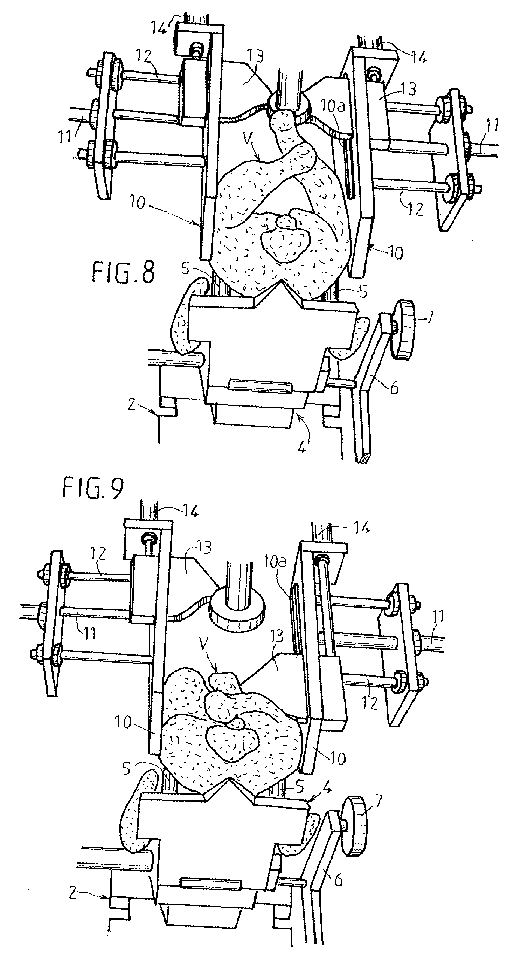

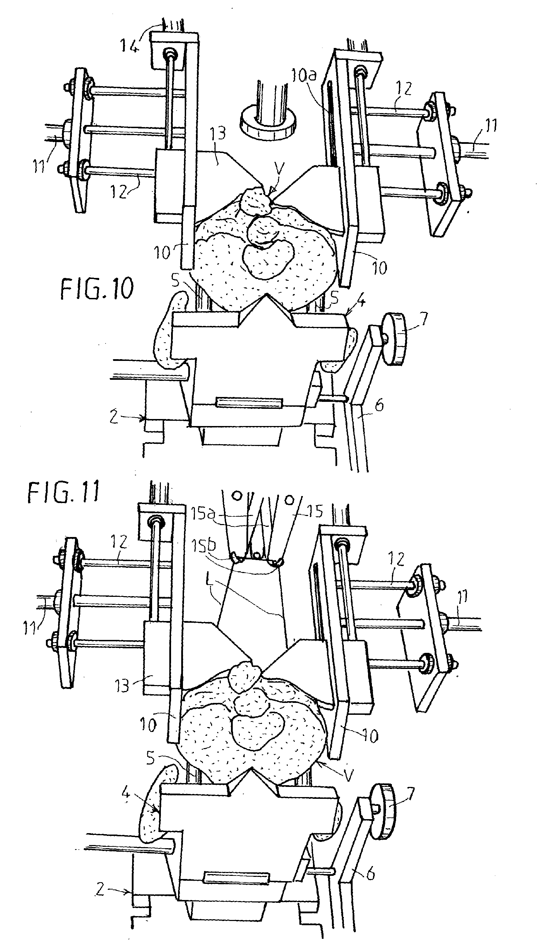

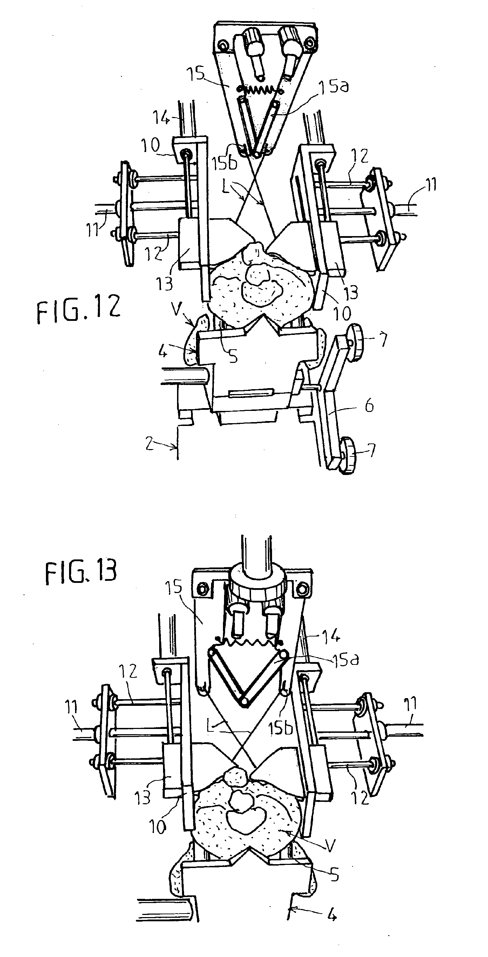

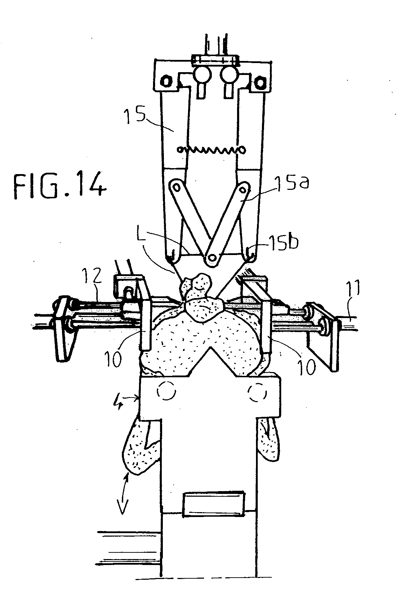

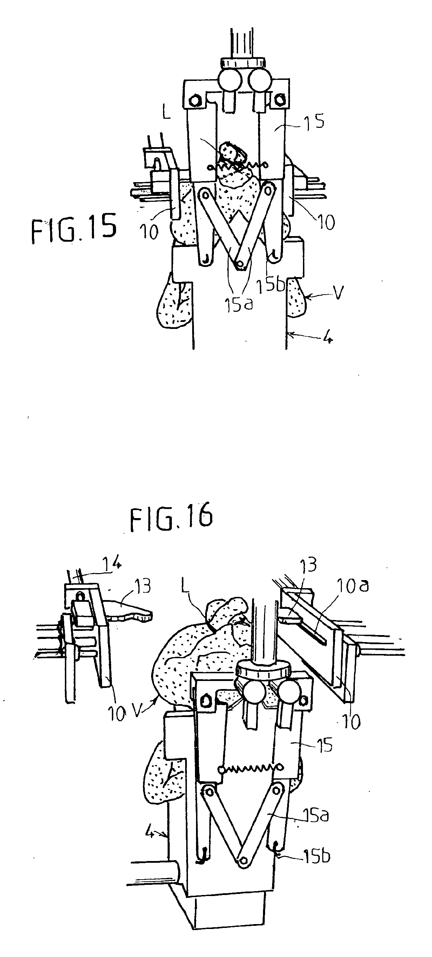

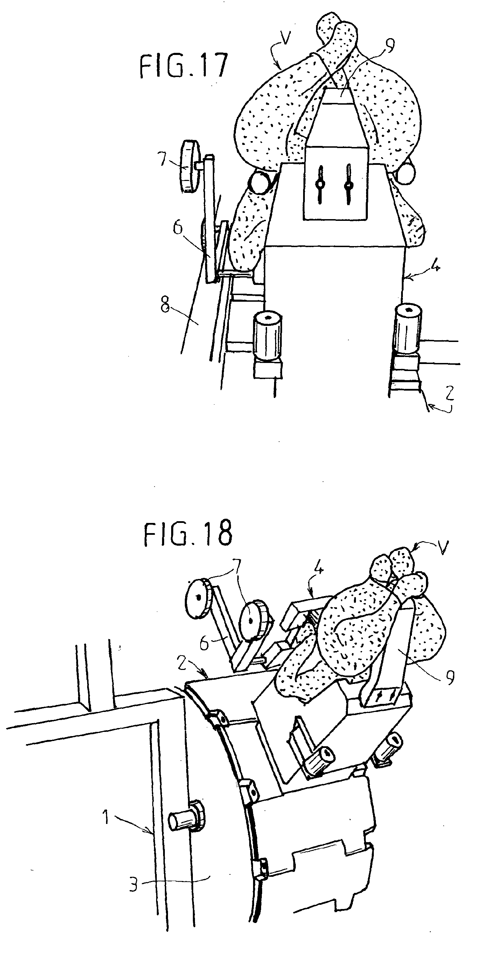

Compte tenu des caractéristiques à la base de l'invention, le bridage automatique de la volaille s'effectue de la manière suivante :
- mise en place d'une volaille entre les doigts de positionnement (5) en appui dorsal sur la semelle (4b) (figure 3) ;
- déplacement du support (4), sous l'effet de l'entraînement linéaire du convoyeur (2) provoquant, au fur et à mesure de son déplacement, la fermeture de la semelle (4b) sous l'effet du bras équerré (6) coopérant avec la rampe (8) (figures 4 et 5) ;
- la volaille est parfaitement positionnée et maintenue dans le réceptacle (4a) en étant « verrouillée » par la semelle (4b), pour être positionnée au niveau du poste de bridage ; à ce niveau, le convoyeur est arrêté momentanément pour une durée correspondant au temps de bridage en tant que tel (figures 6 et 7) ; les plaques d'appui (10) sont écartées (figure 7) ;
- la commande du vérin (11) pour le rapprochement des plaques (10) a pour effet de rapprocher les deux cuisses contre le poitrail (figure 8) ;
- la commande du vérin (14) déplace linéairement les doigts (13) en vue de rabattre en arrière le haut des cuisses contre le poitrail et ramener l'extrémité du pilon en direction du croupion (figures 9 et 10) ;
- descente de la pince, d'un côté du support (4), pour accrocher le lien (L) au moyen des crochets (15b) des bras (15) et déplacement en translation de la pince pour étirer le lien souple à l'extérieur du support (figure 11) ;
- pivotement à 90° de la pince pour croiser les brins du lien (figure 12), les bras (15) étant rapprochés ;
- écartement des bras de la pince (figure 13) ;
- déplacement en translation, en sens inverse, de la pince pour amener le lien croisé au-dessus de la volaille (figure 14) ;
- resserrement et descente de la pince de l'autre côté du support pour enserrer les pattes et le croupion avec, simultanément, dégagement du lien (figures 15 et 16) ;
- remontée de la pince pour la suite du cycle (figure 17) ;
- après bridage, le convoyeur (2) est de nouveau actionné pour entraîner linéairement le support (4) avec la volaille parfaitement bridée (figure 18) ;
- à l'extrémité du convoyeur, le support (4) avec la volaille bridée, a tendance à être entraîné en sens inverse, jusqu'à venir au contact, par le bras équerré (6) et les organes de roulement (7), avec la rampe (16), assurant l'ouverture progressive de la semelle d'appui (4b) pour permettre à la volaille bridée de tomber, par gravité, sur le tapis d'évacuation (17) (figures 19 et 20) ;
- le support (4), ainsi libéré de la volaille, est ensuite acheminé et positionné au niveau du poste situé sous le convoyeur, pour la mise en place automatique d'un autre lien (L), en vue d'un autre cycle de fonctionnement.

Bien évidemment, les différents moyens de commande, donnés à titre indicatif nullement limitatif, sont asservis à tous dispositifs de programmation et de temporisation, afin d'assurer le cycle de fonctionnement tel que décrit ci-dessus. Avantageusement, les différents supports (4) des éléments du convoyeur (2) sont réalisés en matière plastique, notamment en polyéthylène du type alimentaire.

Les avantages ressortent bien de la description.

## Revendications

1. Procédé de bridage d'une volaille, **caractérisé en ce que** :
- on positionne la volaille en appui dorsal dans un support (4) pré-équipé d'un lien élastique (L) sous forme d'une boucle ;
- on déplace le support (4) avec la volaille en direction d'un poste de bridage selon lequel :
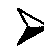 on rapproche simultanément les deux cuisses ;
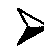 on rabat en arrière, le haut des cuisses sur les filets et l'extrémité du pilon en direction du croupion ;
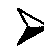 on saisit le lien qui pré-équipe le support, au moyen d'une pince ;
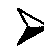 on agit sur la pince en rotation et en translation pour former sensiblement un huit pour enserrer l'extrémité des pattes avec le croupion ;
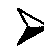 on pivote et on rabaisse la pince pour dégager le lien ;
- on déplace le support (4) avec la volaille bridée en direction d'un poste d'évacuation et de transfert de la volaille ;
- on soumet le support vide à un poste apte à l'équiper d'un autre lien (L) pour un cycle suivant.

2. Machine pour la mise en oeuvre du procédé selon la revendication 1 comprenant au moins un support (4) pour le positionnement d'une volaille, de manière à ce que son croupion et ses pattes soient orientés vers le haut et au moins un poste apte à assurer le bridage des membres de la volaille au niveau de sa partie dorsale et de sa partie ventrale au moyen d'un lien élastique (L) enserrant ledit support,
**caractérisée en ce qu'**elle présente :
- un bâti support (1) équipé d'un convoyeur (2) recevant une pluralité de supports (4) ;
- des moyens (5) pour assurer le positionnement et le maintien de la volaille dans le support (4) au fur et à mesure de son déplacement linéaire ;
- un poste de bridage équipé de moyens (10) aptes à rapprocher simultanément les deux cuisses, de moyens (13) aptes à rabattre en arrière le haut desdites cuisses sur les filets et l'extrémité du pilon, en direction du croupion et d'au moins une pince (15) assujettie à de moyens (13) de commande pour être déplacée selon les trois axes, X, Y, Z;
- un poste d'évacuation de la volaille au fur et à mesure du déplacement du support (4) pour un cycle suivant ;
- un poste de transfert de la volaille ;
- un poste de mise en place d'un lien autour du support.

3. Machine selon la revendication 2, **caractérisée en ce que** le support (4) présente une partie fixe (4a) faisant office de réceptacle et une partie mobile (4b) constituant une semelle d'appui équipée des moyens de prépositionnement réglables (5) de la volaille et de moyens aptes à assurer la mise en place et le maintien de la volaille dans la partie faisant office de réceptacle, au fur et à mesure du déplacement linéaire dudit support (4).

4. Machine selon la revendication 3, **caractérisée en ce que** la partie mobile constituant la semelle d'appui (4b), est articulée par rapport à la partie faisant office de réceptacle (4a) et est équipée des moyens de mise en place et de positionnement sous forme d'un bras équerré (6) présentant, à chacune de ses extrémités, des organes de roulement (7) aptes à coopérer avec une rampe profilée (8) disposée le long du convoyeur, de manière à provoquer le rabattement progressif de la semelle (4b) en direction du réceptacle (4a) au fur et à mesure du déplacement linéaire du support (4) jusqu'au poste de bridage et, au-delà dudit poste, son ouverture progressive pour l'évacuation de la volaille bridée.

5. Machine selon la revendication 3, **caractérisée en ce que** les moyens de prépositionnement réglables de la semelle sont constitués par des doigts (5) en matière souple déformable et entre lesquels est positionné le corps de la volaille en appui au niveau des arrière-cuisses.

6. Machine selon la revendication 3, **caractérisée en ce que** la partie fixe (4a) faisant office de réceptacle présente un bec d'appui profilé (9) apte à coopérer avec le bréchet de la volaille, sensiblement entre les deux cuisses, en alignement avec le croupion pour emprisonner ledit bréchet.

7. Machine selon la revendication 2, **caractérisée en ce que** les moyens aptes à rapprocher simultanément les deux cuisses, sont constitués par deux plaques latérales et parallèles (10) assujetties à des organes de commande (11) pour être rapprochées et écartées l'une de l'autre, lesdites plaques étant disposées parallèlement aux bords longitudinaux du convoyeur (2).

8. Machine selon la revendication 2, **caractérisée en ce que** les moyens aptes à rabattre en arrière les cuisses, sont constitués par des doigts (13) engagés dans des fentes rectilignes (10a) formées dans l'épaisseur des plaques d'appui (10), lesdits doigts (5) étant assujettis à des moyen de commande pour être déplacés en translation dans les deux sens, d'une manière séparée, ou en synchronisme.

9. Machine selon la revendication 2, **caractérisée en ce que** la pince est composée de deux bras (10) assujettis à un système de biellettes déformables (10a) pour être à volonté écartés ou rapprochés, l'extrémité libre desdits bras (10) présentant des moyens de crochetage (10b) aptes à coopérer avec une partie du lien souple.

10. Machine selon la revendication 2, **caractérisée en ce que** les moyens de déplacement de la pince sont constitués par des organes de commande, du type vérin, aptes à assurer le cycle de fonctionnement suivant :
- descente de la pince, d'un côté du support (4), pour accrocher le lien ;
- déplacement en translation de la pince pour étirer le lien à l'extérieur du support (4) ;
- pivotement à 90° de la pince pour croiser les brins du lien ;
- écartement des bras (10) de la pince ;
- déplacement en translation, en sens inverse, de la pince pour ramener le lien croisé au-dessus de la volaille ;
- resserrement et descente de la pince, de l'autre côté du support, pour enserrer les pattes et le croupion, et dégager le lien.

11. Machine selon la revendication 2, **caractérisée en ce que** le poste d'évacuation de la volaille au fur et à mesure du déplacement du support, est constitué par une rampe (16) coopérant avec les organes de roulement (7) du bras équerré (6) que présente la semelle rabattable (4b) du support (4), de manière à permettre l'ouverture de ladite semelle (4b) en vue de libérer la volaille pour qu'elle tombe par gravité sur le poste de transfert.

12. Machine selon la revendication 11, **caractérisée en ce que** le poste de transfert est constitué par un tapis roulant incliné (17).

13. Machine selon la revendication 2 ou 3, **caractérisée en ce que** le poste de mise en place du lien est situé sous le convoyeur (2) et comprend des moyens de stockage de plusieurs liens et des moyens aptes à saisir et à positionner un lien autour de la section externe de la partie fixe (4a) du support (4) faisant office de réceptacle.

14. Machine selon la revendication 2, **caractérisée en ce que** le convoyeur est constitué par une pluralité de plaques articulées entre elles (2), de manière à constituer une chaîne sans fin, en combinaison avec des rouleaux d'entraînement, lesdites plaques (2) présentant des agencements pour la fixation des supports (4).
